# EUROPEAN PATENT SPECIFICATION

(11) **EP 3 339 781 B1**
(45) Date of publication and mention of the grant of the patent: **12.07.2023**
(21) Application number: 17209847.7
(22) Date of filing: 21.12.2017
(51) Int. Cl.: F25D 23/06

(54) **REFRIGERATOR**
KÜHLSCHRANK
RÉFRIGÉRATEUR

(30) Priority: 23.12.2016 KR 20160178619
(43) Date of publication of application: 27.06.2018
(73) Proprietor: Samsung Electronics Co., Ltd., Gyeonggi-do 16677 (KR)
(72) Inventor: YOON, Su Han, Gwangju (KR); KIM, Byung Su, Gyeonggi-do (KR); YANG, Seung Yong, Gyeonggi-do (KR)
(74) Representative: Walaski, Jan Filip

(56) References cited:
- CA-A1- 2 778 727
- DE-A1- 2 201 232
- DE-A1- 19 907 182
- DE-A1-102005 057 143
- DE-A1-102005 057 150
- US-A- 3 142 405
- US-A- 3 165 221
- US-A1- 2012 297 794

## Description

The present disclosure relates to a refrigerator, and more particularly, to an inner case configured to form a storage compartment of a refrigerator.

US3165221 discloses a refrigerator according to the preamble of claim 1, with an inner case including a side panel wherein a front peripheral edge of the side panel is bent outwardly into a double U-shape to form a channel into which a breaker strip is inserted to engage with the side panel.

DE19907182 discloses a heat-insulating wall of a refrigerator.

Generally, a refrigerator includes refrigerating cycle elements therein and is an apparatus capable of storing items stored in the refrigerator by freezing or refrigerating the items using cold air generated by an evaporator of the refrigerating cycle.

The refrigerator includes an outer case configured to form an exterior of the refrigerator and an inner case disposed inside the outer case to form a storage compartment, and an insulator, such as urethane, is filled in a space between the outer case and the inner case for heat insulation.

In the refrigerator, the inner case is generally formed by injecting a melted resin into a mold and then curing the resin. Here, in order to separate the cured inner case from the mold, upper, lower, left, and right sides of the inner case forming the storage compartment need to be formed as inclined surfaces.

To address the above-discussed deficiencies, it is a primary object to provide a refrigerator which allows a capacity of a storage compartment to increase without a change in size of a body thereof.

In addition, it is another aspect of the present disclosure to provide a refrigerator which allows a user to more easily check items stored inside the refrigerator.

Additional aspects of the disclosure will be set forth in part in the description which follows and, in part, will be obvious from the description, or may be learned by practice of the disclosure.

According to an aspect of the invention, there is provided a refrigerator as set out in claim 1.

In accordance with one aspect of the present disclosure, there is provided a refrigerator including a body provided with a storage compartment, wherein the body includes an inner case configured to form the storage compartment, and the inner case includes a front frame configured to form a front side end thereof, a plurality of side panels formed in a plate shape and having front ends coupled to the front frame, and a rear panel coupled to rear ends of the plurality of side panels.

The front frame may be formed in a rectangular ring shape, and the plurality of side panels may include four side panels corresponding to four surfaces of the front frame so that an inner surf space of the four side panels forms the storage compartment.

The plurality of side panels may be formed of a metal material.

Each of the plurality of side panels includes a locking portion formed by a part of the front end of the side panel being bent outward, the front frame includes a front coupling portion coupled to the front end of the side panel, and the front coupling portion includes a locking protrusion with which the locking portion is engaged.

Each of the plurality of side panels includes an elastic portion formed by a part of the rear end of the side panel being bent, and the rear panel includes a rear coupling portion formed in a groove shape so that the elastic portion is inserted into and supported by an inner surface of the rear coupling portion.

The plurality of side panels may be formed of a ceramic material.

The front frame includes a front coupling portion coupled to each of the front ends of the side panels, and the side panels may be fixed to the front coupling portion using an adhesive material.

The rear panel includes a rear coupling portion formed in a groove shape, so that the rear end of each of the side panels is inserted into and supported by the rear coupling portion.

The refrigerator may further include an outer case configured to accommodate the inner case therein and an insulator filled in a space between the outer case and the inner case.

The refrigerator may further include a light source disposed in the front frame, wherein the front frame may further include a light source accommodating portion formed to be concave and accommodate the light source, and a light source cover configured to cover the light source accommodating portion.

The light source may include a substrate and a plurality of light emitting diodes arranged to be spaced apart from each other on the substrate.

The refrigerator may further include a hot water pipe through which hot water passes and a magnet configured to generate a magnetic force, wherein a pipe accommodating groove in which the hot water pipe is accommodated and a magnet accommodating groove in which the magnet is accommodated may be provided in a front surface of the front frame.

The refrigerator may further include a frame cover coupled to the front frame and configured to cover the pipe accommodating groove and the magnet accommodating groove.

In accordance with another aspect of the present disclosure, there is provided a refrigerator including a storage compartment, a light source accommodating portion formed to be concave in at least one surface of an upper surface, a lower surface, and both side surfaces of the storage compartment, and a light source accommodated in the light source accommodating portion, wherein the light source accommodating portion extends vertically or laterally, and the light source includes substrates extending in the extending direction of the light source accommodating portion and a plurality of light emitting diodes arranged on the substrates to be spaced apart from each other in the extending direction of the light source accommodating portion.

The light source accommodating portion may include a pair of light source accommodating portions laterally extending on the upper and lower surfaces of the storage compartment and a pair of light source accommodating portions vertically extending on both of the side surfaces of the storage compartment.

The refrigerator may further include a light source cover configured to cover the light source accommodating portion.

The light source cover may be formed of a translucent white material.

The light source cover may be formed to diffuse light generated by the light source.

Each of the upper surface, the lower surface, and the both side surfaces may include a light source accommodating portion.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Definitions for certain words and phrases are provided throughout this patent document, those of ordinary skill in the art should understand that in many, if not most instances, such definitions apply to prior, as well as future uses of such defined words and phrases.

For a more complete understanding of the present disclosure and its advantages, reference is now made to the following description taken in conjunction with the accompanying drawings, in which like reference numerals represent like parts:
FIG. 1 is a perspective view of a refrigerator in accordance with one embodiment of the present disclosure;
FIG. 2 is a perspective view of an outer case and an inner case of the refrigerator in accordance with one embodiment of the present disclosure;
FIG. 3 is an exploded perspective view of the inner case of the refrigerator in accordance with one embodiment of the present disclosure;
FIG. 4 is a cross-sectional view of a body of the refrigerator in accordance with one embodiment of the present disclosure;
FIG. 5 is an enlarged view of portion A in FIG. 4;
FIG. 6 is an enlarged view of portion B in FIG. 4;
FIGS. 7,8 and 9 are perspective views illustrating a process of manufacturing the inner case of the refrigerator in accordance with one embodiment of the present disclosure; and
FIG. 10 is a partially enlarged view illustrating a state in which a front end of a side case is installed in a refrigerator in accordance with another embodiment of the present disclosure.

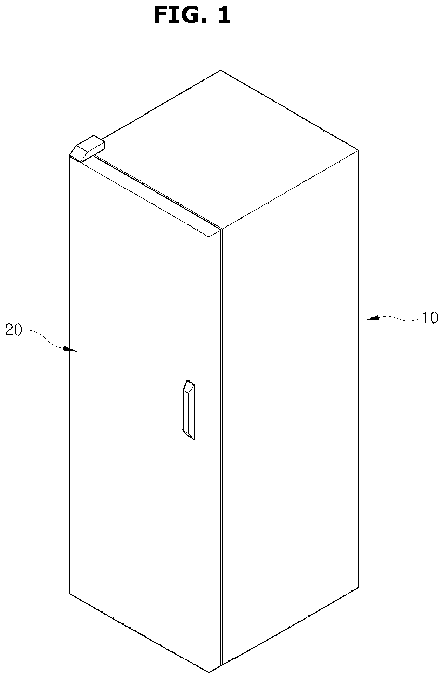

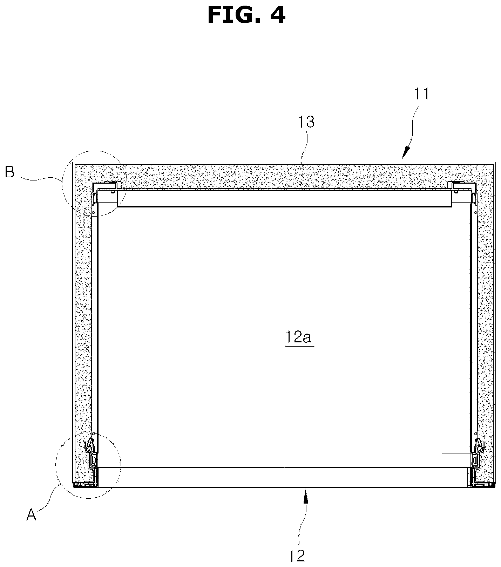

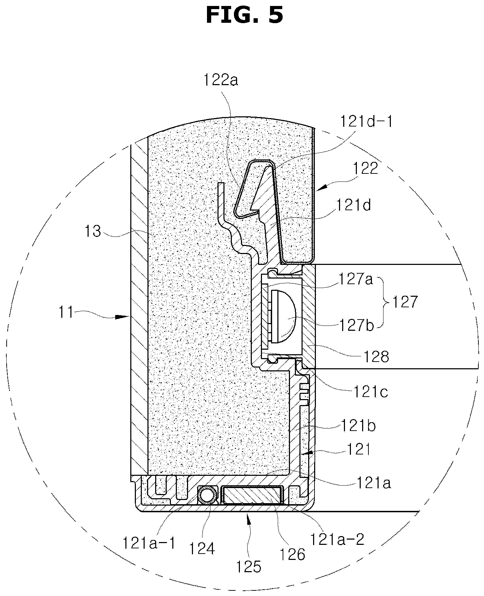

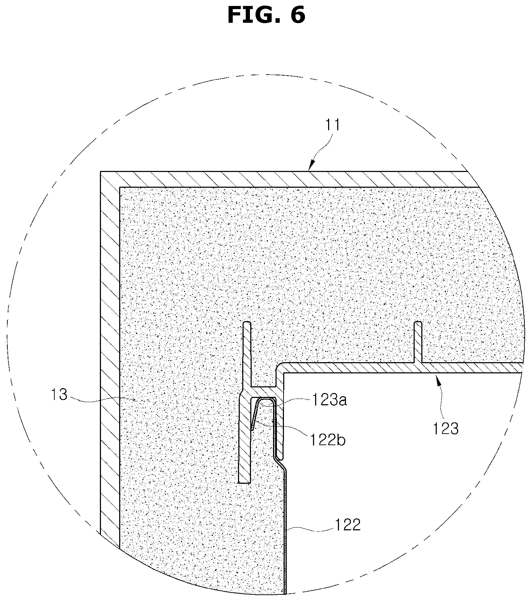

FIGS. 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Embodiments described in this specification and configurations illustrated in drawings are only exemplary examples of the disclosure. It should be understood that the disclosure covers various modifications that may substitute for the embodiments herein and drawings at the time of filing of this application.

Further, identical reference numbers or symbols given in the accompanying drawings of the present specification indicate substantially the same components or components that perform substantially the same function.

Further, terms used in the present specification are used only to describe exemplary embodiments, and are not intended to limit and/or restrict disclosed disclosure. An expression used in the singular encompasses an expression of the plural unless it has a clearly different meaning in the context. In the present specification, it should be understood that the terms such as "including," "having," and "comprising" are intended to indicate the existence of the features, numbers, steps, actions, components, parts, or combinations thereof disclosed in the specification, and are not intended to preclude the possibility that one or more other features, numbers, steps, actions, components, parts, or combinations thereof may exist or may be added.

It should be understood that, although the terms "first," "second," etc. used in the present specification may be used to describe various elements, the elements are not limited by the terms. The terms are only used to distinguish one element from another. For example, a first element could be termed a second element, and, similarly, a second element could be termed a first element without departing from the scope of the present disclosure. As used herein, the term "and/or" includes any and all combinations of one or more of the associated listed items.

In addition, the terms "front end," "rear end," "above/top," "below/bottom," "top end," and "bottom end" used in the present specification are defined with reference to the drawings, but are not limited thereto. The terms do not limit the shape and position of each component.

Hereinafter, a refrigerator in accordance with one embodiment of the present disclosure will be described in detail with reference to the accompanying drawings.

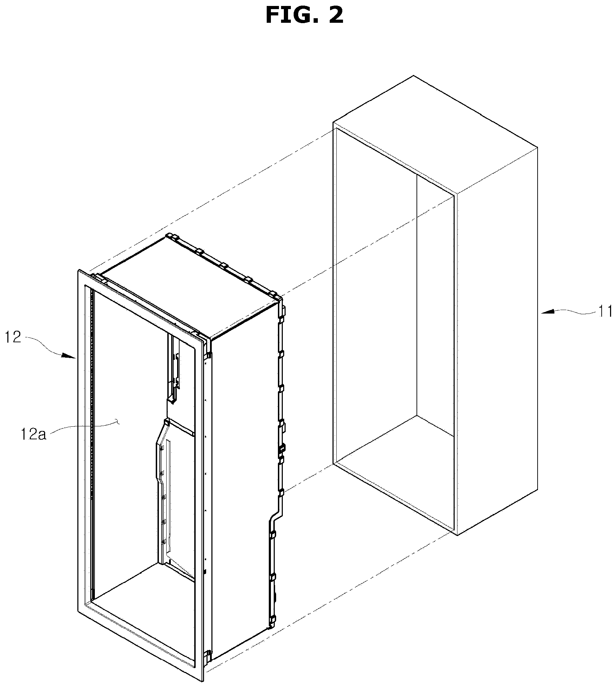

As illustrated in FIG. 1, the refrigerator in accordance with one embodiment of the present disclosure includes a body 10 provided with a storage compartment 12a (see FIG. 2) and a door 20 rotatably installed on a front surface of the body 10 and configured to open and close the storage compartment 12a while rotating.

As illustrated in FIG. 2, the body 10 includes an outer case 11 forming an outer surface thereof and an inner case 12 disposed inside the outer case 11 to form the storage compartment 12a, and an insulator 13 is filled in a space between the outer case 11 and the inner case 12.

The outer case 11 is formed in a rectangular box shape with an open front surface, and is configured to accommodate the inner case 12 therein.

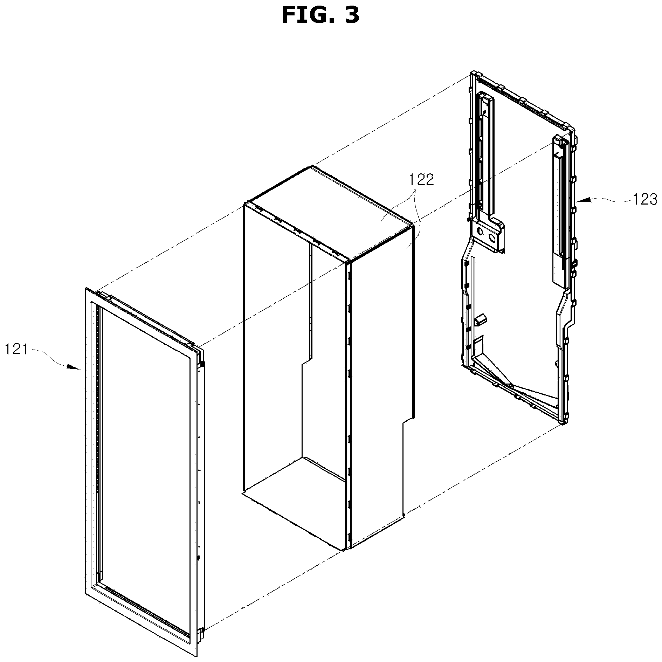

Hereinafter, a detailed configuration of the inner case 12 will be described with reference to FIGS. 3, 4, 5, and 6.

The inner case 12 includes a front frame 121 forming a front side end portion thereof, side panels 122 formed in a plate shape and coupled to the front frame 121, a rear panel 123 coupled to rear ends of the side panels 122 to support the rear ends of the side panels 122 while forming a rear surface of the inner case 12, and a frame cover 125 coupled to a front side of the front frame 121.

The front frame 121 includes a front surface portion 121a formed in a vertically long rectangular ring shape and configured to form a front surface thereof, an extension 121b extending rearward from the front surface portion 121a, a light source accommodating portion 121c formed in a concave shape and configured to accommodate a light source 127, which will be described below, and a front coupling portion 121d extending rearward from the light source accommodating portion 121c and coupled to front ends of the side panels 122.

A hot water pipe 124 through which hot water passes and a magnet 126 configured to generate a magnetic force so that the door 20 maybe in stably contact with the body 10 are disposed on the front surface of the front frame 121. A pipe accommodating groove 121a-1 in which the hot water pipe 124 is accommodated and a magnet accommodating groove 121a-2 in which the magnet 126 is accommodated are provided in the front surface portion 121a of the front frame 121 to accommodate the hot water pipe 124 and the magnet 126. Further, the frame cover 125 is coupled to the front side of the front frame 121 to cover the pipe accommodating groove 121a-1 and the magnet accommodating groove 121a-2.

The extension 121b extends rearward from an inner side end of the front surface portion 121a so that an inner surface of the extension 121b forms a part of the front side of the storage compartment 12a.

The light source accommodating portion 121c is provided on the front side of the storage compartment 12a and formed to be concave with respect to an inner surface of the storage compartment 12a to accommodate the light source 127 that will be described below.

As described above, since the front frame 121 is formed in the rectangular ring shape, four light source accommodating portions 121c are provided to correspond to the rectangular ring shaped front frame 121. That is, the light source accommodating portions 121c are provided to correspond to an upper portion, a lower portion, and both side portions of the front frame 121, and correspond to an upper surface, a lower surface, and both side surfaces of the storage compartment 12a. The light source accommodating portions 121c provided at the upper and lower portions of the storage compartment 12a are disposed to be elongated in a lateral direction, and the light source accommodating portions 121c provided at both sides of the storage compartment 12a are disposed to be elongated in a vertical direction.

A total of four light sources 127 are provided to correspond to the four light source accommodating portions 121c provided on the upper portion, the lower portion, and both of the side portions of the front frame 121. The light sources 127 include four substrates 127a extending in the vertical and lateral directions and accommodated in the light source accommodating portions 121c such that each of the light sources 127 corresponds to an extending direction of the light source accommodating portion 121c, and a plurality of light emitting diodes (LEDs) 127b arranged on the substrates 127a to be spaced apart from each other in the extending direction of the light source accommodating portion 121c. In the embodiment, each of the LEDs 127b includes a lens for diffusing light toward the front side.

The light source accommodating portions 121c are coupled with the light source covers 128 covering the concavely formed light source accommodating portions 121c so that an outer surface of the light source cover 128 forms a part of the inner surface of the storage compartment 12a. The light source cover 128 is formed of a translucent white material and serves to cover the light source 127 and the light source accommodating portion 121c and diffuse the light generated by the LED 127b. Accordingly, the LED 127b and the light source cover 128 operate as a line type light source.

Therefore, since light is supplied to the storage compartment 12a by the line type light sources located in four directions of upward, downward, rightward, leftward directions of the storage compartment 12a, a portion which the light does not reach is reduced, and thus a user using the refrigerator can more easily check items stored in the storage compartment 12a.

The front coupling portion 121d includes locking protrusions 121d-1 with which locking portions 122a of the side panels 122, which will be described below, are engaged so that the side panels 122 maybe coupled with the front coupling portion 121d.

Four side panels 122 are provided to correspond to the four sides of the front frame 121 formed in the rectangular ring shape so that a rectangular shaped space is formed by the four side panels 122, thereby forming the storage compartment 12a.

Therefore, by performing surface treatment on the side panel 122 formed in a plate shape, characteristics of the inner surface of the storage compartment 12a can be easily improved. That is, a design is added to one side surface of the side panel 122 in a state in which the side panel 122 is formed in a plate shape, or an antibacterial treatment or surface roughness improvement is performed thereon through a coating operation, and then, the side panel 122 is coupled to a portion between the front frame 121 and the rear panel 123, the characteristics of the inner surface of the storage compartment 12a can be easily improved.

The side panel 122 includes an upper surface panel coupled to an upper inner side end of the front frame 121 and having a lower surface forming the upper surface of the storage compartment 12a, a lower surface panel coupled to an lower inner side end of the front frame 121 and having an upper surface forming the lower surface of the storage compartment 12a, and a pair of side surface panels coupled to inner side ends of both sides of the front frame 121 and having inner side surfaces forming both of the side surfaces of the storage compartment 12a.

In the embodiments, the side panel 122 is formed of a metal material, specifically, stainless steel among metals, which is a material resistant to moisture. Since the metal material has excellent thermal conductivity, when the side panel 122 is formed of the metal material, as in the present embodiment, cool air may be transmitted more quickly by the side panel 122 to allow the entire inside of the storage compartment 12a to be evenly cooled.

As described above, since the side panels 122 a reformed of a metal, the side panels may be bent. Accordingly, each of the side panels 122 includes the locking portion 122a formed by a portion of the front end side of side panel 122 being bent outward, and an elastic portion 122b provided at the rear end of the side panel 122 and inserted into and coupled to a rear coupling portion 123a of the rear panel 123.

A plurality of the locking portions 122a are formed to be spaced apart from each other at the front ends of the side panels 122 and engaged with the above-described locking protrusions 121d-1. Further, the elastic portion 122b is bent to have an approximate U shape to exhibit elasticity so that the elastic portion 122b is elastically supported on an inner surface of the rear coupling portion 123a.

The rear panel 123 is formed of a resin material, and the rear coupling portion 123a, to which the above-described elastic portion 122b of the side panels 122 is coupled, is provided on a front outer side of the rear panel 123.In the present embodiment, the rear coupling portion 123a is provided in a groove shape in the front surface of the rear panel 123 so that the elastic portion 122b is elastically supported on the inner surface of the rear coupling portion 123a.

Next, a manufacturing process of the inner case of the refrigerator constituted as described above will be described in detail with reference to the accompanying drawings.

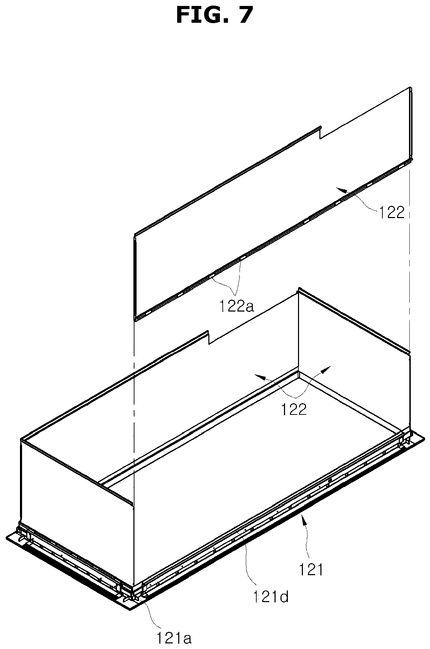

First, as shown in FIG. 7, the front frame 121 is formed in a rectangular ring shape using four bar-shaped members, and then the front surface portion 121a of the front frame 121 is laid on a floor to face downward.

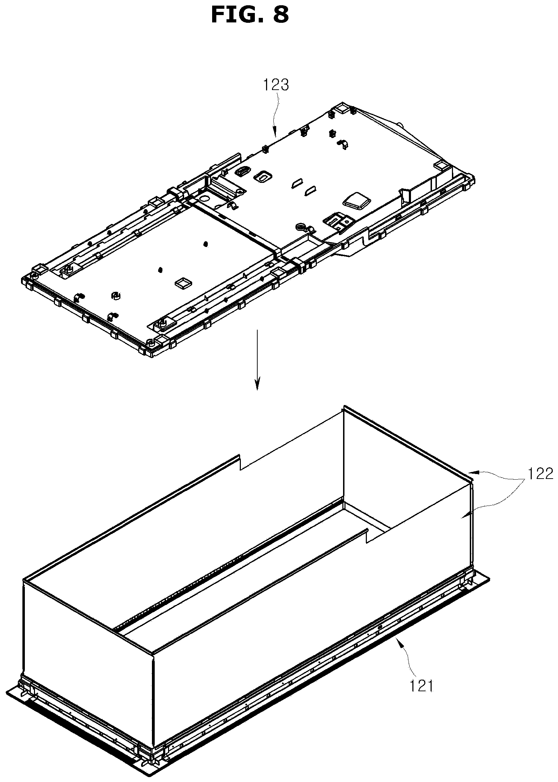

In such a state, front ends of the side panels 122 are sequentially coupled to the front coupling portions121d formed on a rear end side of the front frame 121 so that a rectangular space is formed by the side panels 122, as shown in FIG. 8.

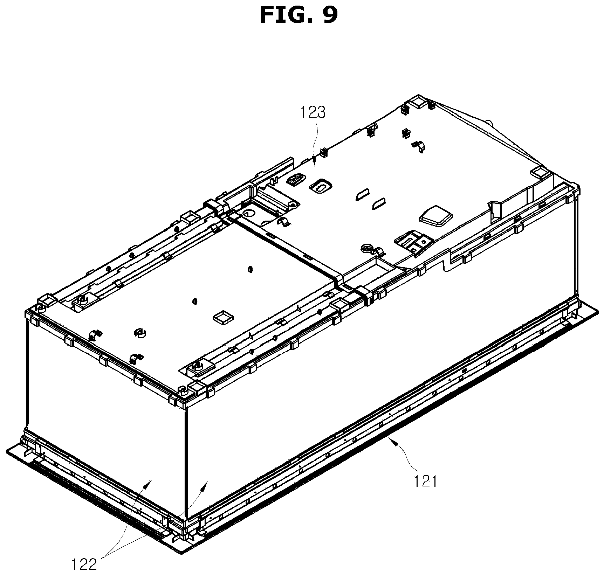

Subsequently, when the rear panel 123 is coupled to the rear ends of the side panels 122, the elastic portion 122b provided at the rear end of each of the side panels 122 is inserted into and supported by the rear coupling portion123a, and thereby the manufacturing process of the inner case 12 is completed, as shown in FIG. 9.

After the inner case 12 manufactured as described above is disposed in the outer case 11, the insulator 13, such as urethane, is filled in a space between the outer case 11 and the inner case 12, and a manufacturing process of the body 10 is roughly completed.

In the embodiment, the side panels 122 are made of a metal material, but this is merely an example, and the side panel may be formed of a material such as a ceramic or marble which is difficult to be finely processed to form the storage compartment 12a.

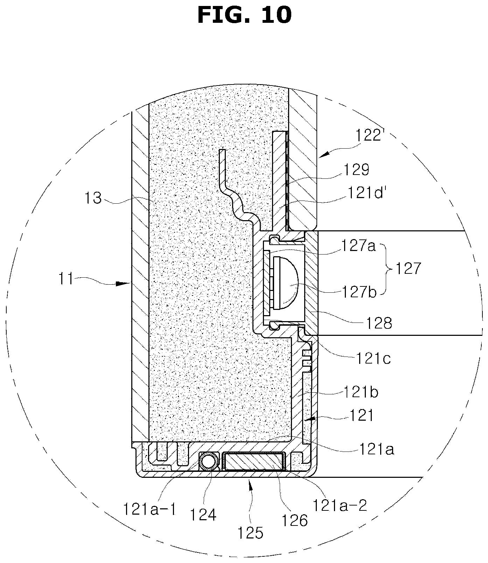

FIG. 10 illustrates a state in which the side panels 122 formed in a plate shape and formed of a material such as a ceramic or marble are installed on the front frame 121.As shown in the drawing, the front ends of the side panels 122 are fixed to the front coupling portions121d using an adhesive material 129 such as a double-sided tape, an adhesive, or the like, and, although not shown in the drawing, the rear ends of the side panels 122 are inserted into and supported by the rear coupling portion 123a formed in a groove shape.

Accordingly, by forming the storage compartment using the plate-shaped side panel 122 as described above, characteristics of the storage compartment and a design of the inner surface of the storage compartment can be improved in various ways.

As is apparent from the above description, a refrigerator in accordance with one embodiment of the present disclosure has a storage compartment formed by coupling plate-shaped side panels to portions between a front frame and a rear panel so that a side surface of the storage compartment does not need to be formed as an inclined surface, thereby further increasing a capacity of the storage compartment.

In addition, in a refrigerator in accordance with one embodiment of the present disclosure, since four side surfaces of a storage compartment are formed by side panels formed in a plate shape, characteristics of the inside of the storage compartment can be easily improved by performing surface treatment on the side panels.

In addition, in a refrigerator in accordance with one embodiment of the present disclosure, since light is supplied to a storage compartment in upward, downward, leftward, and rightward directions, a user can easily confirm items stored inside the storage compartment.

Although the present invention has been described with exemplary embodiments, various changes and modifications may be suggested to one skilled in the art. It is intended that the present disclosure encompass such changes and modifications as fall within the scope of the appended claims.

## Claims

1. A refrigerator comprising a body (10) provided with a storage compartment (12a), wherein:
the body (10) includes an inner case (12) configured to form the storage compartment (12a); and
the inner case (12) includes:
a front frame (121) configured to form a front of the inner case (12),
a plurality of side panels (122) formed in a plate shape and having front ends coupled to the front frame (121), and
a rear panel (123) coupled to rear ends of the plurality of side panels (122),
wherein the front frame (121) includes a coupling portion (121d) terminating in a locking protrusion (121d-1); and
the front end of each of the plurality of side panels (122) includes a locking portion (122a) arranged in the form of a hook (122a), **characterized in that** the end of the hook (122a) extends towards the locking protrusion (121d-1) and engages with the locking protrusion (121-d) to couple the front frame (121) to the front end of each of the plurality of side panels (122),
wherein each of the plurality of side panels (122) includes an elastic portion (122b) formed by a part of a rear end of a side panel (122) being bent into an approximate U-shape; and
the rear panel (123) includes a rear coupling portion (123a) formed in a groove shape, so that the elastic portion (122b) is inserted into and supported by an inner surface of the rear coupling portion (123a).

2. The refrigerator according to claim 1, wherein:
the front frame is formed in a rectangular ring shape; and
the plurality of side panels include four side panels corresponding to four surfaces of the front frame so that an inner space of the four side panels forms the storage compartment.

3. The refrigerator according to claim 1 or 2, wherein the plurality of side panels are formed of a metal material.

4. The refrigerator according to claim 1, 2 or 3, wherein the plurality of side panels are formed of a ceramic material.

5. The refrigerator according to claim 4, wherein:
the front frame includes a front coupling portion (121d) coupled to each of the front ends of the side panels; and
the side panels are fixed to the front coupling portion using an adhesive material.

6. The refrigerator according to claim 4 or 5, wherein the rear panel includes a rear coupling portion (123a) formed in a groove shape so that a rear end of each of the side panels is inserted into and supported by the rear coupling portion.

7. The refrigerator according to any one of the preceding claims, further comprising:
an outer case (11) configured to accommodate the inner case therein; and
an insulator (13) filled in a space between the outer case and the inner case.

8. The refrigerator according to claim 1 or 2, further comprising a light source (127) disposed at the front frame,
wherein the front frame further includes:
a light source accommodating portion (121c) formed to be concave and accommodate the light source, and
a light source cover (128) configured to cover the light source accommodating portion.

9. The refrigerator according to claim 8, wherein the light source includes a substrate (127a) and a plurality of light emitting diodes (127b) arranged to be spaced apart from each other on the substrate.

10. The refrigerator according to any one of the preceding claims, further comprising:
a hot water pipe (124) through which hot water passes; and
a magnet (126) configured to generate a magnetic force,
wherein a pipe accommodating groove (121a-1) in which the hot water pipe is accommodated and a magnet accommodating groove (121a-2) in which the magnet is accommodated are provided in a front surface of the front frame.

11. The refrigerator according to claim 10, further comprising a frame cover (125) coupled to the front frame and configured to cover the pipe accommodating groove and the magnet accommodating groove.

## Patentansprüche

1. Kühlschrank, umfassend einen Körper (10), der mit einem Speicherfach (12a) versehen ist, wobei:
der Körper (10) ein inneres Gehäuse (12) beinhaltet, das konfiguriert ist, um das Speicherfach (12a) zu bilden; und
wobei das innere Gehäuse (12) Folgendes beinhaltet:
einen vorderen Rahmen (121), der konfiguriert ist, um eine Vorderseite des inneren Gehäuses (12) zu bilden,
eine Vielzahl von Seitenplatten (122), die in einer Plattenform gebildet sind und vordere Enden aufweisen, die mit dem vorderen Rahmen (121) gekoppelt sind, und
eine hintere Platte (123), die mit den hinteren Enden der Vielzahl von Seitenplatten (122) verbunden ist,
wobei der vordere Rahmen (121) einen Kopplungsabschnitt (121d) beinhaltet, der in einem Verriegelungsvorsprung (121d-1) endet; und
das vordere Ende von jeder der Vielzahl von Seitenplatten (122) einen Verriegelungsabschnitt (122a) beinhaltet, der in Form eines Hakens (122a) angeordnet ist, **dadurch gekennzeichnet, dass**
sich das Ende des Hakens (122a) in Richtung des Verriegelungsvorsprungs (121d-1) erstreckt und in den Verriegelungsvorsprung (121-d) eingreift, um den vorderen Rahmen (121) mit dem vorderen Ende von jeder der Vielzahl von Seitenplatten (122) zu koppeln,
wobei jede der Vielzahl von Seitenplatten (122) einen elastischen Abschnitt (122b) beinhaltet, der durch einen Teil eines hinteren Endes eines Seitenplatte (122) gebildet ist, das in eine ungefähre U-Form gebogen ist; und
die hintere Platte (123) einen hinteren Kopplungsabschnitt (123a) beinhaltet, der in Form einer Nut gebildet ist, sodass der elastische Abschnitt (122b) in eine Innenfläche des hinteren Kopplungsabschnitts (123a) eingeführt und davon gehalten wird.

2. Kühlschrank nach Anspruch 1, wobei:
der vordere Rahmen in einer rechteckigen Ringform gebildet ist; und
die Vielzahl von Seitenplatten vier Seitenplatten beinhalten, die vier Oberflächen des vorderen Rahmens entsprechen, sodass ein Innenraum der vier Seitenplatten das Speicherfach bildet.

3. Kühlschrank nach Anspruch 1 oder 2, wobei die Vielzahl der Seitenplatten aus einem Metallmaterial gebildet ist.

4. Kühlschrank nach Anspruch 1, 2 oder 3, wobei die Vielzahl der Seitenplatten aus einem keramischen Material gebildet ist.

5. Kühlschrank nach Anspruch 4, wobei:
der vordere Rahmen einen vorderen Kopplungsabschnitt (121d) beinhaltet, der mit jedem der vorderen Enden der Seitenplatten gekoppelt ist; und
die Seitenplatten mit einem Klebematerial an dem vorderen Kopplungsabschnitt befestigt sind.

6. Kühlschrank nach Anspruch 4 oder 5, wobei die hintere Platte einen hinteren Kopplungsabschnitt (123a) beinhaltet, der in einer Nutform gebildet ist, sodass ein hinteres Ende von jeder der Seitenplatten in den hinteren Kopplungsabschnitt eingeführt und davon gehalten wird.

7. Kühlschrank nach einem der vorherigen Ansprüche, ferner umfassend:
ein äußeres Gehäuse (11), das konfiguriert ist, um das innere Gehäuse darin aufzunehmen; und
einen Isolator (13), der in einen Raum zwischen dem äußeren Gehäuse und dem inneren Gehäuse gefüllt ist.

8. Kühlschrank nach Anspruch 1 oder 2, ferner umfassend eine Lichtquelle (127), die an dem vorderen Rahmen angeordnet ist,
wobei der vordere Rahmen ferner Folgendes beinhaltet:
einen Lichtquellen-Aufnahmeabschnitt (121c), der gebildet ist, um konkav zu sein und die Lichtquelle aufzunehmen, und
eine Lichtquellenabdeckung (128), die konfiguriert ist, um den Lichtquellen-Aufnahmeabschnitt abzudecken.

9. Kühlschrank nach Anspruch 8, wobei die Lichtquelle ein Substrat (127a) und eine Vielzahl von Leuchtdioden (127b) beinhaltet, die angeordnet sind, um auf dem Substrat voneinander beabstandet zu sein.

10. Kühlschrank nach einem der vorherigen Ansprüche, ferner umfassend:
ein Heißwasserrohr (124), durch das heißes Wasser fließt; und
einen Magneten (126), der konfiguriert ist, um eine Magnetkraft zu erzeugen,
wobei eine Rohraufnahmenut (121a-1), in der das Heißwasserrohr untergebracht ist, und eine Magnetaufnahmenut (121a-2), in der der Magnet untergebracht ist, in einer vorderen Fläche des vorderen Rahmens bereitgestellt sind.

11. Kühlschrank nach Anspruch 10, ferner umfassend eine Rahmenabdeckung (125), die mit dem vorderen Rahmen gekoppelt und konfiguriert ist, um die Rohraufnahmenut und die Magnetaufnahmenut abzudecken.

## Revendications

1. Réfrigérateur comprenant un corps (10) doté d'un compartiment de stockage (12a),
ledit corps (10) comprenant un boîtier interne (12) conçu pour former le compartiment de stockage (12a) ; et
le boîtier interne (12) comprenant :
un cadre avant (121) conçu pour former un avant du boîtier interne (12),
une pluralité de panneaux latéraux (122) formés en forme de plaque et possédant des extrémités avant couplées au cadre avant (121), et
un panneau arrière (123) couplé aux extrémités arrière de la pluralité de panneaux latéraux (122),
ledit cadre avant (121) comprenant une partie de couplage (121d) se terminant par une saillie de verrouillage (121d-1) ; et
ladite extrémité avant de chacun de la pluralité de panneaux latéraux (122) comprenant une partie de verrouillage (122a) agencée sous la forme d'un crochet (122a), **caractérisé en ce que**
l'extrémité du crochet (122a) s'étend vers la saillie de verrouillage (121d-1) et se met en prise avec la saillie de verrouillage (121-d) pour coupler le cadre avant (121) à l'extrémité avant de chacun de la pluralité de panneaux latéraux (122),
chacun de la pluralité de panneaux latéraux (122) comprenant une partie élastique (122b) formée par une partie d'une extrémité arrière d'un panneau latéral (122) pliée en une forme approximative en U ; et
ledit panneau arrière (123) comprenant une partie de couplage arrière (123a) formée en forme de rainure, afin que la partie élastique (122b) soit insérée dans une surface interne de la partie de couplage arrière (123a), ou supportée par celle-ci.

2. Réfrigérateur selon la revendication 1,
ledit cadre avant étant formé en forme d'anneau rectangulaire ; et
ladite pluralité de panneaux latéraux comprenant quatre panneaux latéraux correspondant à quatre surfaces du cadre avant afin qu'un espace interne des quatre panneaux latéraux forme le compartiment de stockage.

3. Réfrigérateur selon la revendication 1 ou 2, ladite pluralité de panneaux latéraux étant formés d'un matériau métallique.

4. Réfrigérateur selon la revendication 1, 2 ou 3, ladite pluralité de panneaux latéraux étant formés d'un matériau céramique.

5. Réfrigérateur selon la revendication 4, ledit cadre avant comprenant une partie de couplage avant (121d) couplée à chacune des extrémités avant des panneaux latéraux ; et
lesdits panneaux latéraux étant fixés à la partie d'accouplement avant à l'aide d'un matériau adhésif.

6. Réfrigérateur selon la revendication 4 ou 5, ledit panneau arrière comprenant une partie de couplage arrière (123a) formée en forme de rainure afin qu'une extrémité arrière de chacun des panneaux latéraux soit insérée dans la partie de couplage arrière et soit supportée par cette-dernière.

7. Réfrigérateur selon l'une quelconque des revendications précédentes, comprenant en outre : un boîtier externe (11) conçu pour recevoir le boîtier interne ; et un isolant (13) remplissant un espace entre le boîtier externe et le boîtier interne.

8. Réfrigérateur selon la revendication 1 ou 2, comprenant en outre une source de lumière (127) disposée au niveau du cadre avant,
ledit cadre avant comprenant en outre :
une partie de réception (121c) de source de lumière formée pour être concave et recevoir la source de lumière, et
un couvercle (128) de source de lumière conçu pour recouvrir la partie de réception de source de lumière.

9. Réfrigérateur selon la revendication 8, ladite source de lumière comprenant un substrat (127a) et une pluralité de diodes électroluminescentes (127b) agencées pour être espacées les unes des autres sur le substrat.

10. Réfrigérateur selon l'une quelconque des revendications précédentes, comprenant en outre : un tuyau d'eau chaude (124) à travers lequel passe l'eau chaude ; et un aimant (126) conçu pour générer une force magnétique, une rainure de réception (121a-1) de tuyau dans laquelle le tuyau d'eau chaude est reçu et une rainure de réception (121a-2) d'aimant dans laquelle l'aimant est reçu sont prévues dans une surface avant du cadre avant.

11. Réfrigérateur selon la revendication 10, comprenant en outre un couvercle de cadre (125) couplé au cadre avant et conçu pour recouvrir la rainure de réception de tuyau et la rainure de réception d'aimant.
